# EUROPEAN PATENT SPECIFICATION

(11) **EP 1 489 021 B1**
(45) Date of publication and mention of the grant of the patent: **04.05.2011**
(21) Application number: 03745441.0
(22) Date of filing: 28.03.2003
(51) Int. Cl.: B65D 65/02, B65D 81/24, B65D 1/00, B65D 23/02

(54) **CONTAINER PREPARED FROM POLYETHYLENE TEREPHTHALATE RESIN**
AUS POLYETHYLENTEREPHTHALATHARZ HERGESTELLTER BEHÄLTER
RECIPIENT PREPARE A PARTIR DE RESINE DE POLYETHYLENE TEREPHTALATE

(30) Priority: 28.03.2002 JP 2002090094
(43) Date of publication of application: 22.12.2004
(73) Proprietor: Yoshino Kogyosho Co., Ltd., Tokyo 136-8531 (JP)
(72) Inventor: KOJIMA, Naoyuki, Matsudo-shi, Chiba 270-2297 (JP); ENJOJI, Taro, Matsudo-shi, Chiba 270-2297 (JP); YAMAZAKI, Hirohisa, Matsudo-shi, Chiba 270-2297 (JP); IMAI, Toshio, Matsudo-shi, Chiba 270-2297 (JP); KOSHIO, Shuichi, Matsudo-shi, Chiba 270-2297 (JP)
(74) Representative: Gray, James
(86) International application number: PCT/JP2003/003942
(87) International publication number: WO 2003/082697

(56) References cited:
- WO-A1-01/03521
- JP-A- 2001 031 759
- JP-A- 2001 048 182
- JP-A- 2001 097 342

## Description

### Technical Field

This invention relates to a container comprising a polyethylene terephthalate-based resin (hereinafter referred to as PET-based resin) and having an oxygen-capturing function and an oxygen barrier property, which have been improved by treating the container with radiation.

In the past, the PET-based resin containers have been utilized in various applications, including the fields of foods, drinks, and medicines, due to easy moldability and distinguished properties, such as transparency, chemical resistance, heat resistance, and mechanical strength, and have been used as the containers in which to fill those contents that have to be kept away from the contact with oxygen, including beer, fruit drinks, tea, coffee, and dips.

If the oxygen barrier property falls short in the containers using a PET-based resin alone, then the PET-based resin is blended with an oxygen barrier resin, such as an ethylene vinyl alcohol copolymer or a nylon resin, or an oxygen barrier layer is laminated with the PET-based resin layers.

Even if an oxygen barrier resin is laminated, as described above, to make the container usable, there still is oxygen in the air on and above the contents inside the container after it has been filled with the contents. Since this oxygen cannot be removed, there was no way to prevent the contents completely from coming in contact with oxygen and to avoid the oxidation of the contents. To cope with this problem, Published Patent Application JP 1989-278344 discloses a multi-layered plastic container that enables oxygen to captured by an intermediate layer, which is molded by a resinous composition containing a transition metal complex in an oxygen barrier resin.

However, the method disclosed in the above patent application 1989-278844 some problems. Firstly, a high production cost is derived from the process for mixing a metal complex with the oxygen barrier resin. Secondly, moldability gets worse. Thirdly, the container has to be multi-layered because the metal complexes leach out and cannot be used for the surface with which the contents come in direct contact. Lastly, oxygen within the container cannot be fully captured because the layer having the oxygen-capturing function cannot be used as the inner layer.

US 6255248 discloses a composition capable of scavenging oxygen composed of a copolymer of, at least, ethylene and a strained, cyclic alkylene, preferably cyclopentene; a transition metal catalyst; a photoinitiator; and, optionally, a polymeric diluent.

### Disclosure of the Invention

According to the present invention, there is provided a method of producing a polyethylene terephthalate-based resin container having oxygen capture and barrier properties, the method comprising the steps of:
moulding a container from polyethylene terephthalate-based resin to which there has not been added such substances as a metal complex, an oxidation catalyst or an oxidation initiator, and
treating the container with radiation after molding thereof to improve the oxygen capture and barrier properties of the container.

The means of carrying out the invention of Claim 1 to solve the above-described problems exists in the configuration that the container comprises a polyethylene terephthalate resin and has an oxygen-capturing property and an oxygen barrier property that have been improved by treating the container with radiation after the molding operation.

The polyethylene terephthalate resin(hereinafter referred to as PET resin)is mainly used as the PET-based resin in the container of this invention. But as far as the nature of the PET-based resin is not impaired, copolymerized polyesters containing other polyester units can be used in addition to a major portion of ethylene terephthalate units. As the components that can be used in this invention to form a polyester copolymer, there may be mentioned dicarboxylic acid components, such as isophthalic acid, naphthalene-2,6-dicarboxylic acid, and adipic acid; and glycolic components, such as propylene glycol, 1,4-butane-diol, tetramethylene glycol, neopentyl glycol, cyclohexane dimethanol, and diethylene glycol.

The PET-based resin blended with another resin can be used within a limit in which the nature of the PET-based resin is not impaired. For example, polyethylene naphthalate (PEN) can be blended with the PET-based resin to improve heat resistance and chemical resistance, or a nylon resin can be blended to improve heat resistance and gas barrier property.

Those resins having the gas barrier property can also be used by laminating them with the PET-based resin within the limit in which the nature of the PET-based resin container is not impaired.

Amorphous PET-based resin can also be used as a PET-based resin. The amorphous PET-based resin has no melting peak when it is measured the melting temperature (Tm) using a differential scanning calorimeter (DSC). An example of amorphous PET-based resin is PETG of Eastman Chemical Company, which is obtained by copolymerizing PET-based with a glycol component, such as cyclohexane dimethanol.

Radiation, such as alpha ray, beta ray, gamma ray, X-ray, neutron radiation, and electron beam, can be used in this invention.

Irradiation causes free radicals to be generated inside the PET-based resin. These radicals react with oxygen existing dissolved in the resin. As a result, the oxygen-capturing function is fulfilled.

The above-described oxygen-capturing function serves to capture oxygen that dissolves into the container wall from outside and moves to the inside of the container. During the period in which this oxygen-capturing function is active, the transmission of oxygen from outside to the inside of the container is controlled. Thus, the irradiation improves the oxygen barrier property of the exposed container much more than that of the container to which no radiation has been applied.

On the other hand, since there is no need of adding such substances as a metal complex, an oxidation catalyst, or an oxidation initiator, to obtain the oxygen-capturing function, the layer having the oxygen-capturing function can be brought into direct contact with the contents. After the container has been filled with the contents and sealed, oxygen existing in the air above the contents inside the container and oxygen dissolved in the contents move into the container wall and react there with free radicals. In this manner, oxygen inside the container can be reduced effectively within a short period.

The means of carrying out the invention of Claim 2 exists in the configuration that the container comprises a single layer of the PET-based resin specified in the invention of Claim 1.

In the above configuration of Claim 2, even an ordinary single-layered PET-based resin container can be provided with the oxygen-capturing function by irradiating the container after it has been molded, without adding thereto such substances as a metal complex, an oxidation catalyst, and an oxygen initiator. For at least the period in which this oxygen-capturing function is maintained, the container keeps an improved level of oxygen barrier property.

The means of carrying out the invention of Claim 3 exists in the configuration that the container specified in the invention of Claim 1 has at least an inner layer and an outer layer, with both layers comprising the PET-based resin.

Multi-layered containers having an intermediate layer of a gas barrier resin are used to improve the gas barrier property. By the configuration of Claim 3, the inner and outer layers are made of the PET-based resin. Therefore, it becomes possible to retain distinguished properties of the PET-based resin, such as moldability, transparency, heat resistance, chemical resistance, and mechanical strength.

The means of carrying out the invention of Claim 4 exists in the configuration that the PET-based resin specified in the invention of the preceding Claims is blended with an oxygen barrier resin at a rate in the range of 1.0 to 30 wt.%.

Any oxygen barrier resin, which is well known in the art, can be used, including nylon resins, such as nylon 6, nylon 66, and polyamide containing xylylene radicals; and an ethylene vinyl alcohol polymer.

By the above-described configuration of Claim 4, the PET-based resin in use is blended with a resin having an oxygen barrier property. Since oxygen creeping in from outside can be inhibited to a lower level than when the PET-based resin is used alone, the free radicals generated by irradiation have fewer opportunities in which these radicals are diminished by the oxygen creeping in from outside. Therefore, the oxygen-capturing function continues to work for a longer period, and the oxygen barrier property is maintained at an improved level for a longer period, than the usual.

The oxygen barrier resin is blended with the PET-based resin in a relatively small amount. Therefore, most of the oxygen barrier resin is not exposed to the outer or inner surface of the container, but is scattered inside the wall, and has little chance of coming in direct contact with oxygen existing inside and outside of the container. The oxygen-capturing function of the scattered oxygen barrier resin is maintained for an extended period, and thus the oxygen barrier property can be maintained at an improved level during that period.

The oxygen barrier resin has usually an active radical of some kind, such as a double bond or a carbonyl radical. In many cases, irradiation tends to increase the frequency of radical generation, and therefore, improves the oxygen-capturing function of the container.

In this configuration, it is necessary for the oxygen barrier resin to be blended in an amount in the range of 1 to 30 wt.%. At a level less than 1%, the oxygen-capturing function would show only a minor level of improvement. Above 30%, the PET-based resin would lose its original moldability, transparency, and mechanical strength.

The means of carrying out the invention of Claim 5 exists in the configuration that the oxygen barrier resin specified in the invention of Claim 4 is a polyxylylene diamine adipamide resin (Nylon-MXD6).

Due to the above-described configuration of Claim 5, Nylon-MXD6 resin has outstanding oxygen barrier property. Since Nylon-MXD6 has xylylene radicals on the main chain, this resin has a high oxygen-absorbing ability by nature. Furthermore, since Nylon-MXD6 tends to generate free radicals when it is exposed to radiation, the blend with the PET-based resin fully demonstrates the oxygen-capturing function.

The means of carrying out the invention of Claim 6 exists in the configuration that the container specified in the invention of the preceding Claims is treated with a radiation dose of 20 kGy or more.

Radiation of 20 kGy or more applied to the container can be remarkably effective in improving the oxygen barrier property. The larger the extent of irradiation, the more improved oxygen-capturing function is derived, but coloration may be caused disadvantageously. The upper limit to irradiation can be set suitably, depending on the color development of the resins, the purpose intended for the container, and the necessity.

The means of carrying out the invention of Claim 7 exists in the configuration that the container specified in the invention of Claim 1, Claim 3, or Claim 4 or Claim 5when not dependent (D) upon Claim 2 has at least an intermediate layer comprising an oxygen barrier resin.

In the above-described configuration of Claim 7, the oxygen barrier property is greatly improved by the existence of an intermediate layer having the oxygen barrier property. Therefore, the invasion of the container by outside oxygen can be inhibited dramatically. There are much fewer opportunities for the free radicals generated by irradiation to be consumed by the incoming outside oxygen. Even at a low dose of radiation, the oxygen-capturing function can be persistent for an extended period, and the oxygen barrier property is maintained at an improved level during that period.

The oxygen-capturing function of the oxygen barrier resin is maintained for an extended period because the intermediate layer comprising the oxygen barrier resin does not come in direct contact with the oxygen inside or outside of the container. This detached condition allows the oxygen barrier property to be maintained at an improved level during that period.

The means of carrying out the invention of Claim 8 exists in the configuration that the oxygen barrier resin of the container specified in the invention of Claim 7 is a polyxylylene diamine adipamide resin (Nylon-MXD6).

Nylon-MXD6 has an outstanding oxygen barrier property. Because this nylon has xylylene radicals on the main chain, free radicals tend to be generated by irradiation. If this nylon is laminated with a PET-based resin, then it is possible for the container to perform fully the oxygen-capturing function.

Nylon-MXD6 can be blended easily with the PET-based resin, or the container of a multi-layered structure can also be molded. In either way, a high level of productivity can be maintained for the container.

The means of carrying out the invention of Claim 9 exists in the configuration that a radiation dose of 6 kGy or more is applied to the container specified in the invention of Claim 7 or 8.

The oxygen-capturing function is effectively performed by the container having an intermediate layer comprising an oxygen barrier resin. Even at a dose as small as 6 kGy, an improved effect of the oxygen barrier property is demonstrated.

The means of carrying out the invention of Claim 10 exists in the configuration I that an electron beam is used as the source of radiation in the invention of any preceding Claim.

Any well-known electron irradiation equipment can be used industrially with relative ease.

### Brief Description of the Drawings

Fig. 1 is a graph showing time-lapsed changes in the oxygen-absorbing rates for the PET and Nylon-MXD6 resins after exposure to electron beam radiation.
Fig. 2 is a graph showing time-lapsed changes in the oxygen transmission rates for the PET-based resin containers of Examples 1 to 3.

### Preferred Embodiments of the Invention

This invention comprises applying radiation to the PET resin container from outside to generate free radicals, which imparts the oxygen-capturing function to the container and improves the oxygen barrier property. The action and effect and the actual configuration of this invention are further described below in examples.

Table 1 shows the results of the measurements using a PET resin and Nylon-MXD6 (T-600, Toyobo) as the oxygen barrier resin to evaluate the improvement in the oxygen-capturing function, which should be given by the exposure to radiation.

### • Method of measurement:

Electron irradiation equipment was used to apply doses of 20, 100, and 1,000 kGy to each type of the resin samples. The irradiated samples comprising 50 g of PET resin and 45 g of Nylon-MXD6 pellets were sealed in 50-ml sample bottles and kept at 22°C. The oxygen content of air inside the bottles was measured over time, and was expressed in the amount of oxygen that was absorbed in 1 g of resin (cc/g). Table 1 shows the values measured after 56 days, and also shows the results from unexposed resin samples.

**Table 1. Oxygen Absorption Rates (cc/g)**

| | Unexposed | 20 kGy | 100 kGy | 1,000 kGy |
|---|---|---|---|---|
| PET | 0.0018 | 0.0090 | 0.0282 | 0.0421 |
| MXD6 | 0.0067 | 0.0306 | 0.0514 | 0.0596 |

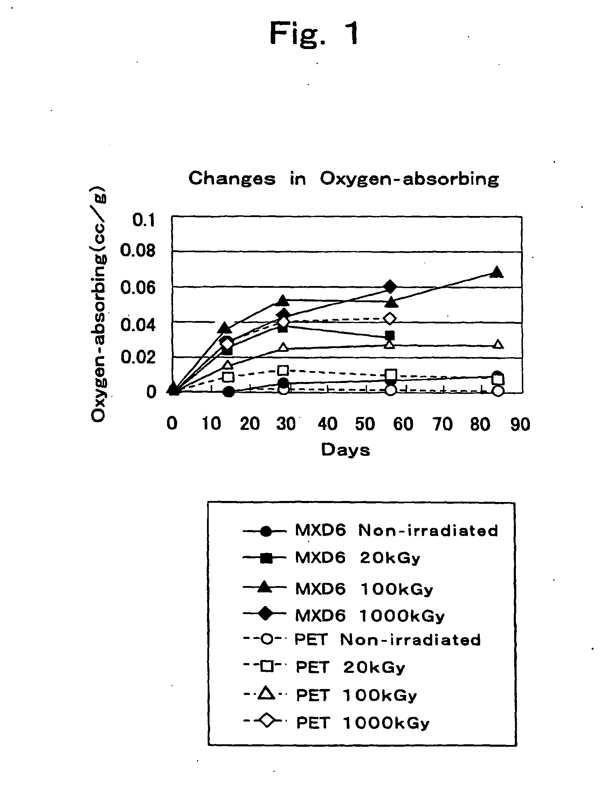

Fig. 1 shows the graph of variations over time in the oxygen absorption rates.

From Table 1 it is found that after electron irradiation, Nylon-MXD6 resin has a larger oxygen-absorbing ability than the PET resin has. It is also found that both resins show greatly improved oxygen absorption rates achieved solely by means of the electron irradiation without adding thereto a metal complex, an oxidation catalyst, or an oxidation initiator, or without modifying the resins.

Fig. 1 shows that the oxygen-absorbing function remains active for about 30 days in the unexposed samples of the PET resin and the PET resine samples irradiated at doses of 20, 100, and 1,000 kGy and the unexposed samples of Nylon-MXD6 and the Nylon-MXD6 samples irradiated at a dose of 20 kGy. Furthermore, it is also found that oxygen absorption continues to work after 50 days in the samples of Nylon-MXD6 irradiated at doses of 100 and 1,000 kGy.

This invention is now described by the examples using 3 types of containers. In Example 1, the PET resine bottle used in the measurement was obtained by the biaxial drawing and blow-molding method. In Example 2, the bottle was obtained by using a biaxial extruder to blend 4 wt.% Nylon-MXD6 with the PET resin, and then biaxially drawing and blow-molding the blended material. In Example 3, the multi-layered bottle was obtained by biaxially drawing and blow-molding the multi-layers comprising PET resin (inner layer) - Nylon-MXD6 resin - PET resin (outer layer). These bottles were fixed on the rotary irradiation jigs, and were rotated while electron beams were irradiated, using well-known electron irradiation equipment. The Nylon-MXD6 resin laminated in Example 3 had a proportion of 5 wt.%.

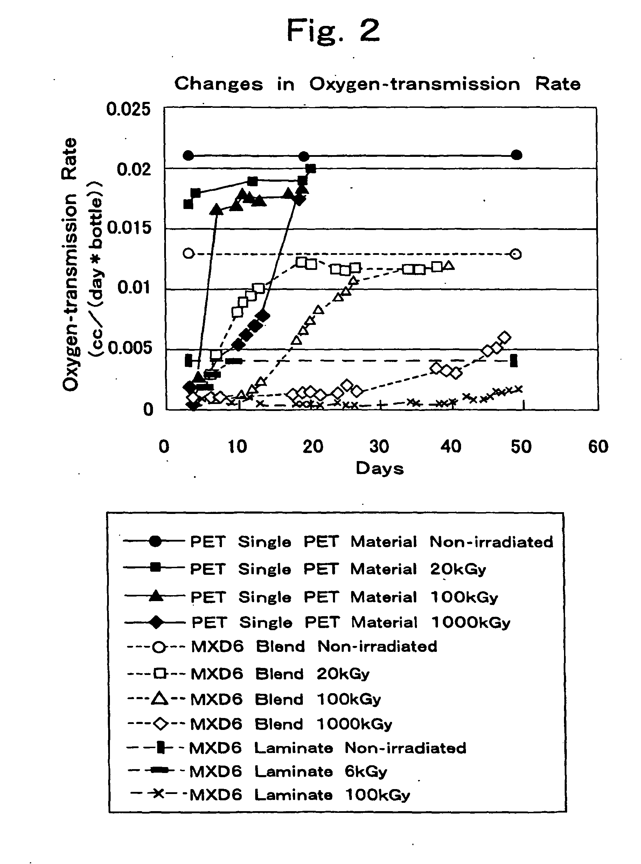

After irradiation, each bottle was measured for its oxygen gas transmission rate over time. Table 2 shows the transmission rates measured after certain periods of days. Fig. 2 is a graph showing the changes in the transmission rates over time.

### - Test conditions:

1) Bottle: A capacity of 300 ml; an average body wall thickness of 0.35 mm
2) Method of transmission rate measurement:
Measuring device: MOCON Ox-Tran, 22°C - 55%RH, unit in cc/(day-bottle)

**Table 2. Oxygen Transmission Rate (cc/(day-bottle))**

| | | Lapsed days | Electron irradiation dose | | | |
|---|---|---|---|---|---|---|
| | | | No exposure | 20 kGy | 100 kGy | 1,000 kGy |
| Example 1 | Single PET | After 20 days | 0.021 | 0.021 | 0.019 | 0.020 |
| Example 2 | MXD6 blend | After 40 days | 0.013 | 0.012 | 0.012 | 0.0032 |
| Example 3 | MXD6 laminate | After 40 days | 0.004 | - | 0.0008 | - |

Fig. 2 shows that concerning the bottle of Example 1 comprising a single layer of PET resin, the larger the irradiation is, the lower oxygen transmission rate is derived in the initial period of the test. In about 20 days, transmission was saturated, and the transmission rate came up to the same level as unexposed bottle. This behavior corresponded to the changes over time in the oxygen absorption rate of the PET resin. During the initial period, it is suspected that the oxygen transmission rate stays at a low level because of the oxygen absorption.

Thus, even the single-layered PET resin bottle is found to demonstrate the oxygen-capturing effect in- and outside of the container, managing the oxygen transmission rate to be kept at a low level for at least 20 days. Therefore, the exposed single-layered bottle can be effectively utilized in applications having relatively short shell lives.

The unexposed bottle of Example 2 comprising a single layer of PET blended with Nylon-MXD6 shows a considerably lower oxygen transmission rate than the bottle of single-layered PET alone because of the blending effect. As found from Fig. 2, the electron beam irradiation gave far lower rates. With a radiation dose of 1,000 kGy, the low transmission rate is fully demonstrated even after 50 days. This result can be understood reasonably from the time-lapsed changes in the oxygen absorption rates shown in Fig. 1.

Due to the lamination effect, the multi-layered bottle of Example 3 comprising also Nylon-MXD6 shows an oxygen transmission rate about 1/5 as low as that of the single-layered bottle of PET alone under the unexposed condition. As found from Fig. 2, the electron beam irradiation improved the oxygen barrier property so as to extend the effective duration for about 10 days at a dose as low as 6 kGy. A dose of 100 kGy allowed the container to have a transmission rate about 1/2 as low as found in the unexposed bottle after 50 days. In addition, since the Nylon-MXD6 layer serves as a large barrier and stands against oxygen that invades from outside the bottle, it is believed that the effect of lamination continues for an extended period even when the bottle has been irradiated at a low dose.

It was thus found that with no addition of a metal complex, an oxidation catalyst, or an oxidation initiator, the electron beam irradiation onto the PET resin container simply gave the container the oxygen-capturing function and greatly improved the oxygen barrier property. The duration of improved oxygen barrier may differ, depending on whether the body wall consists of a single layer of PET resin, a blended layer comprising an oxygen barrier resin, or laminated layers.
With considering the intended use and the shelf lives the most suitable container wall can be selected from among these types.

In Example 3, this invention was described by taking up a multi-layered bottle having a structure comprising PET resin (inner layer) - Nylon-MXD6 - PET resin (outer layer). It should be understood that the laminate structure of the multi-layered container is not limited to this Example. In Example 3, for instance, use can be made of a container having an adhesive layer to adhere the PET resin to the Nylon-MXD6 resin, or a container having an intermediate layer comprising the PET resin blended with a small amount of Nylon-MXD6. Indeed, any combination of various layers can be used for any purpose as far as the nature of the PET resin container is retained. The oxygen barrier resine to be selected for this invention is also not limited to the Nylon-MXD6 resin that has been taken up in Examples 2 and 3.

### Effect of Invention

This invention having the above-described configuration has the following effects: In the invention of Claim 1, the radiation applied to the container simply creates free radicals within the PET-based resin, thus giving the oxygen-capturing function to the container. As a result, oxygen is prevented from transmitting from outside to the inside of the container for the period in which this oxygen-capturing function remains active. So irradiation improves the oxygen barrier property of the container better than that of the unexposed container.

There is no need to add, among others, any metal complex, oxidation catalyst, or oxidation initiator. The contents can be brought to direct contact with the inner wall of the container. Oxygen existing inside the container can be reduced effectively in a short period of time.

In the invention of Claim 2, the ordinary single-layered PET-based resin container can be given an oxygen-capturing function and an improved oxygen barrier property and can be used in a wide range of applications, simply when radiation is applied to the container without adding any metal complex, oxidation catalyst, and oxidation initiator.

In the invention of Claim 3, both the inner and outer layers are made of a PET-based resin. Thus, the container retains outstanding properties, such as moldability, transparency, heat resistance, chemical resistance, and mechanical strength, which the PET-based resin has.

In the invention of Claim 4, a small amount of a resin having the oxygen barrier property is blended with the PET-based resin. The use of such a blend allows the container to keep oxygen transmission from outside at a low level. As a result, free radicals generated by irradiation have fewer opportunities to disappear. The oxygen-capturing function continues to work for a further extended period, and the oxygen barrier property remains in the improved state during that period.

In many cases, oxygen barrier resins generally tend to generate free radicals when the resins are exposed to radiation. These resins themselves come to have an improved oxygen-capturing function, due to irradiation. On the whole, the container is led to acquire further improved levels of oxygen-capturing function and oxygen barrier property.

In the invention of Claim 5, the Nylon-MXD6 resin has an excellent oxygen barrier property. Since this resin has xylylene radicals on the main chain, free radicals tend to be generated when the resin is exposed to radiation. The container can fully demonstrate a high oxygen-capturing function if the PET-based resin is blended with Nylon-MXD6.

In the invention of Claim 6, the oxygen barrier property is greatly improved when the container is exposed to a radiation dose of 20 kGy or more.

In the invention of Claim 7, the container acquires an improved oxygen barrier property because this container has an intermediate layer comprising an oxygen barrier resin. Thus, it is possible to control the penetration of outside oxygen at a strikingly low level. As a result, free radicals generated by irradiation have far fewer opportunities in which the radicals are diminished by oxygen creeping in from outside. In that case, even a small radiation dose is enough to keep the oxygen-capturing function working for a longer period than the usual, and the oxygen barrier property is maintained at an improved level during that period.

The intermediate layer comprising an oxygen barrier resin does not come in direct contact with oxygen inside or outside of the container. Owing to this lack of contact, the oxygen-capturing function continues to work for a more extended period than usual, and the oxygen barrier property is maintained at an improved level during that period.

In the invention of Claim 8, Nylon-MXD6 has an outstanding oxygen barrier property. Because this nylon has xylylene radicals on the main chain, free radicals tend to be generated by irradiation. If this nylon is laminated with a PET-based resin, it is possible for the container to perform the full oxygen-capturing function.

Nylon-MXD6 can be blended easily with the PET-based resin, and the container of a multi-layered structure can also be molded. In either way, highly productive containers can be obtained.

In the invention of Claim 9, the oxygen-capturing function is effectively performed by the container having an intermediate layer comprising an oxygen barrier resin. Even at a dose as small as 6 kGy, an improved effect of the oxygen barrier property is demonstrated.

In the invention of Claim 10, any well-known electron irradiation equipment can be used industrially with relative ease.

## Claims

1. A method of producing a polyethylene terephthalate-based resin container having oxygen capture and barrier properties, the method comprising the steps of:
moulding a container from polyethylene terephthalate-based resin to which there has not been added such substances as a metal complex, an oxidation catalyst or an oxidation initiator; and
treating the container with radiation after molding thereof to improve the oxygen capture and barrier properties of the container.

2. A method as claimed in claim 1, wherein said container comprises a single layer of the polyethylene terephthalate resin.

3. A method as claimed in claim 1, wherein said container has at least an inner layer and an outer layer, with both layers comprising the polyethylene terephthalate-based resin.

4. A method as claimed in any preceding claim, wherein the polyethylene terephthalate resin to be used is blended with an oxygen barrier resin at a rate in the range of 1.0 to 30 wt.%.

5. A method as claimed in claim 4, wherein the oxygen barrier resin is a polyxylylene diamine adipamide resin (Nylon-MXD6).

6. A method as claimed in any preceding claim, wherein said container is treated with radiation at a dose of 20 kGy or more.

7. A method as claimed in claim 1,claim 3, or claims 4 or claim 5 when not dependent upon claim 2, wherein said container has at least an intermediate layer comprising an oxygen barrier resin.

8. A method as claimed in claim 7, wherein the oxygen barrier resin is a polyxylylene diamine adipamide resin (Nylon-MXD6).

9. A method as claimed in claim 7 or claim 8, wherein radiation is applied to said container at a dose of 6 kGy or more.

10. A method as claimed in any preceding claim, wherein an electron beam is used as the source of radiation.

## Patentansprüche

1. Verfahren zur Herstellung eines Kunststoffbehälters mit Sauerstoffeinfang- und -sperreigenschaften auf Basis Polyethylenterephthalat, umfassend die Schritte
- Formen eines Behälters aus einem Kunststoff auf Basis Polyethylenterephthalat, zu dem keine Substanzen wie Metallkomplexe, Oxydationskatalysatoren oder Oxydationsinitiatoren zugesetzt wurden,
- Behandeln des Behälters nach seiner Formung mit Strahlung zur Verbesserung seiner Sauerstoffeinfang- und - sperreigenschaften.

2. Verfahren nach Anspruch 1, worin der Behälter eine einzige Schicht des Kunststoffs auf Basis Polyethylenterephthalat umfasst.

3. Verfahren nach Anspruch 1, worin der Behälter zumindest eine innere Schicht und eine äußere Schicht aufweist, wobei beide Schichten den Kunststoff auf Basis Polyethylenterephthalat umfassen.

4. Verfahren nach einem der vorangehenden Ansprüche, worin der zu verwendende Polyethylenterephthalat-Kunststoff mit einem Sauerstoff sperrenden Kunststoff in einem Verhältnis von 1,0 bis 30 Gew.-% abgemischt ist.

5. Verfahren nach Anspruch 4, worin der Sauerstoff sperrende Kunststoff ein Polyxylylendiamin-Adipamid-Kunststoff (Nylon MXD6) ist.

6. Verfahren nach einem der vorangehenden Ansprüche, worin der Behälter mit Strahlung einer Dosis von 20 kGy oder mehr behandelt wird.

7. Verfahren nach einem der Ansprüche 1, 3, oder nach einem der Ansprüche 4 oder Anspruch 5, wenn diese nicht von Anspruch 2 abhängen, worin der Behälter zumindest eine Zwischenschicht aufweist, die einen Sauerstoff sperrenden Kunststoff umfasst.

8. Verfahren nach Anspruch 7, worin der Sauerstoff sperrende Kunststoff ein Polyxylylendiamin-Adipamid-Kunststoff (Nylon MXD6) ist.

9. Verfahren nach Anspruch 7 oder 8, worin auf den Behälter Strahlung mit einer Dosis von 6 kGy oder mehr angewendet wird.

10. Verfahren nach einem der vorangehenden Ansprüche, worin als Strahlungsquelle ein Elektronenstrahl verwendet wird.

## Revendications

1. Procédé de production d'un contenant en résine à base de polyéthylène téréphtalate ayant des propriétés de capture de l'oxygène et de barrière contre l'oxygène, le procédé comprenant les étapes consistant à :
mouler un contenant à partir d'une résine à base de polyéthylène téréphtalate à laquelle n'a été ajoutée aucune substance telle qu'un complexe métallique, un catalyseur de l'oxydation ou un initiateur de l'oxydation ; et
traiter le contenant par des rayonnements après moulage de ceux-ci afin d'améliorer les propriétés de capture de l'oxygène et de barrière contre l'oxygène du contenant.

2. Procédé selon la revendication 1, dans lequel ledit contenant comprend une seule couche de la résine de polyéthylène téréphtalate.

3. Procédé selon la revendication 1, dans lequel ledit contenant a au moins une couche interne et une couche externe, les deux couches comprenant la résine à base de polyéthylène téréphtalate.

4. Procédé selon l'une quelconque des revendications précédentes, dans lequel la résine de polyéthylène téréphtalate à utiliser est mélangée avec une résine barrière à l'oxygène à un taux dans la plage allant de 1,0 à 30 % en poids.

5. Procédé selon la revendication 4, dans lequel la résine barrière à l'oxygène est une résine de polyxylylène diamine adipamide (Nylon-MXD6).

6. Procédé selon l'une quelconque des revendications précédentes, dans lequel ledit contenant est traité par des rayonnements à une dose supérieure ou égale à 20 kGy.

7. Procédé selon la revendication 1, la revendication 3, ou la revendication 4 ou la revendication 5 lorsqu'elles ne dépendent pas de la revendication 2, dans lequel ledit contenant a au moins une couche intermédiaire comprenant une résine barrière à l'oxygène.

8. Procédé selon la revendication 7, dans lequel la résine barrière à l'oxygène est une résine de polyxylylène diamine adipamide (Nylon-MXD6).

9. Procédé selon la revendication 7 ou la revendication 8, dans lequel les rayonnements sont appliqués au dit contenant à une dose supérieure ou égale à 6 kGy.

10. Procédé selon l'une quelconque des revendications précédentes, dans lequel un faisceau d'électrons est utilisé comme source de rayonnements.
